# EUROPEAN PATENT APPLICATION

(11) **EP 4 810 351 A1**
(43) Date of publication of application: **23.09.2026**
(21) Application number: 25164551.1
(22) Date of filing: 18.03.2025
(51) Int. Cl.: B62D 6/00

(54) **METHOD, APPARATUS AND SYSTEM FOR ALLEVIATING INSTABILITY OF VEHICLE CAUSED BY AQUAPLANING**

(71) Applicant: Hyundai Mobis Co., Ltd., Gangnam-gu Seoul 06141 (KR)
(72) Inventor: PINTO, Lorenzo, 60316 Frankfurt am Main (DE)
(74) Representative: Vossius & Partner Patentanwälte Rechtsanwälte mbB

(57) **Abstract**

A method, an apparatus and a system for alleviating instability of a vehicle caused by aquaplaning are disclosed. According to an embodiment of the present disclosure, a method performed by a control device of a vehicle comprises deactivating a steer-by-wire (SbW) actuator when aquaplaning is detected (S410), maintaining deactivation of the SbW actuator for a predetermined period of time after the aquaplaning is over (S420), reactivating the SbW actuator after the predetermined period of time has elapsed (S420) and compensating for steering offset when a steering offset exists after reactivating the SbW actuator (S440).

## Description

### Technical Field

The present invention relates to a method and an apparatus for alleviating the instability of a vehicle caused by aquaplaning. More specificnally, the present invention relates to a method and an apparatus for alleviating the instability of a vehicle caused by aquaplaning by deactivating a steer-by-wire (SbW) actuator of the vehicle when aquaplaning occurs.

### Background of the Invention

The description described below merely provides background information related to this embodiment, and does not constitute the related art.

Aquaplaning is a phenomenon in which a water film is formed between a tire of a vehicle and a road surface when the vehicle drives on a wet road surface at a high speed, and the tire cannot come into contact with the road surface. When aquaplaning occurs, the performance related to the operation and stop of the vehicle is degraded, and the possibility of a traffic accident is increased. In addition, when the aquaplaning is over, the tire of the vehicle comes into contact with the road surface again, and a sudden change in the road surface contact force occurs, which may cause the vehicle to become unstable.

A steer-by-wire (SbW) system is a system that controls the steering of a vehicle using an electronic signal. The SbW system uses electronic control to limit the driver's abrupt steering response to prevent excessive steering. The SbW system analyzes the movement of the vehicle to automatically correct the steering to alleviate the instability of the vehicle. In addition, the SbW system effectively controls the slippage of the vehicle in connection with an electronic stability program (ESP) device, an anti-lock braking system (ABS), a transaction control system (TCS), and the like. Accordingly, when aquaplaning occurs, research is needed to control the SbW system to alleviate the instability of the vehicle.

### Technical Problem

An object of the present disclosure is to deactivate a steer-by-wire (SbW) actuator when aquaplaning occurs, in a vehicle having front steerable wheels with positive caster angle of wheels steer axis.

In addition, according to an embodiment, the purpose is to maintain the deactivation of the SbW actuator for a predetermined period of time when aquaplaning is over.

In addition, according to one embodiment, the object is to compensate for steering offset when aquaplaning is over and the steering offset exists.

The problems to be solved by the present invention are not limited to the above-mentioned problems, and other problems that are not mentioned will be clearly understood by those skilled in the art from the following description.

### Technical Solution

According to embodiments of the present disclosure, a method performed by a control device of a vehicle, the method comprises deactivating a steer-by-wire (SbW) actuator when aquaplaning is detected, maintaining deactivation of the SbW actuator for a predetermined period of time after the aquaplaning is over, reactivating the SbW actuator after the predetermined period of time has elapsed and compensating for steering offset when a steering offset exists after reactivating the SbW actuator.

According to embodiments of the present disclosure, an apparatus for controlling a vehicle may include a memory; and a plurality of processors, wherein at least one processor of the plurality of processors is configured to: deactivate a SbW actuator when aquaplaning is detected, maintain deactivation of the SbW actuator for a predetermined period of time after the aquaplaning is over, reactivate the SbW actuator after the predetermined period of time has elapsed and compensate for steering offset when a steering offset exists after reactivating the SbW actuator.

### Advantageous Effects

According to the present disclosure, when aquaplaning occurs, there is an effect of alleviating the instability of a vehicle and improving the stability of the vehicle.

In addition, according to an embodiment, when aquaplaning occurs, there is an effect of improving the experience of a driver.

Effects that may be obtained in the present disclosure are not limited to the above-mentioned effects, and other effects that are not mentioned will be clearly understood by those skilled in the art from the following description.

### Brief Description of the Drawings

FIG. 1 is a block diagram for describing a control system of a vehicle according to an embodiment of the present disclosure.
FIGS. 2A, 2B, and 2C are diagrams for describing a wheel angle of a vehicle, a velocity of a vehicle, and a yaw rate of a vehicle when aquaplaning occurs, according to an embodiment of the present disclosure.
FIG. 3 is a flowchart for describing a process of controlling a vehicle when aquaplaning occurs, according to an embodiment of the present disclosure.
FIG. 4 is a flowchart for describing a method of alleviating the instability of a vehicle when aquaplaning occurs, according to an embodiment of the present disclosure.

### Detailed Contents for Carrying Out the Invention

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

The following detailed description, together with the accompanying drawings, is intended to describe exemplary embodiments of the present disclosure and is not intended to represent the only embodiments in which the present disclosure may be practiced.

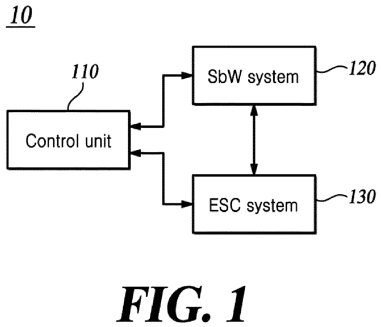

FIG. 1 is a block diagram for describing a control system of a vehicle according to an embodiment of the present disclosure.

Referring to FIG. 1, a control system 10 of a vehicle includes, in whole or in part, a control unit 110, a steer-by-wire (SbW) system 120, an electronic stability control (ESC) system 130, and the like. The control system 10 of the vehicle and each component thereof may be implemented in hardware or software, or may be implemented as a combination of hardware and software. In addition, functions of each component may be implemented in software, and one or more processors may be implemented to execute functions of software corresponding to each component.

When aquaplaning is detected, the control unit 110 cuts off the power supplied to the SbW system 120 to deactivate a SbW actuator. The control unit 110 maintains the inactivity of the SbW actuator for a period of time after the end of the aquaplaning. After a period of time, the control unit 110 causes power to be supplied to the SbW system 120 to activate the SbW actuator again. Here, the control unit 110 may be the control device of the vehicle of the present disclosure.

The control unit 110 controls the ESC system 130 not to brake the front wheels of the vehicle when aquaplaning is detected. This is because when the ESC system 130 brakes the front wheels of the vehicle while the aquaplaning is in progress, unnecessary steering may be caused to the front wheels. The control unit 110 controls the ESC system 130 to restrictively brake the rear wheels of the vehicle when aquaplaning is detected. When the ESC system 130 brakes the rear wheels of the vehicle while the aquaplaning is in progress, it may alleviate the instability of the direction of the vehicle, and may be used to detect a mu-jump that increases rapidly after the aquaplaning is over.

A steer offset may be present in the vehicle after the aquaplaning has ended. Here, the steering offset is the difference that occurs between the position of the driver's steering wheel and the actual driving direction of the vehicle. For example, in a case where the vehicle does not drive in a straight line even when the steering wheel is located at the center but drives to one side, it may be considered that there is a steering offset. When there is a steering offset in the vehicle after the aquaplaning is over, the control unit 110 may repeat the process of deactivating and reactivating the SbW actuator of the SbW system 120 at least once or more to compensate for the steering offset. This compensation of the steering offset may be carried out in the course of the vehicle driving in a straight line.

In another embodiment, when aquaplaning is detected, the control unit 110 may control the direction of the steering wheel of the vehicle to be aligned with the direction of the wheel. In this case, the steering offset that occurs after the when aquaplaning is over may be minimized. In addition, when the aquaplaning is detected, the control unit 110 may control the steering wheel of the vehicle to be fixed, and may transmit information on whether the aquaplaning occurs to the driver. In this case, the steering offset may be changed according to the lateral velocity and the yaw rate of the vehicle after the aquaplaning is over. In addition, the control unit 110 may not control the steering wheel of the vehicle when aquaplaning is detected. In this case, information on whether aquaplaning occurs is not transmitted to the driver, and a steering offset that occurs after the aquaplaning is over may be changed according to a steering input of the driver.

The SbW system 120 is a system that controls the steering of a vehicle using an electronic signal rather than a mechanical steering connection. The SbW system 120 may include a sensor, an electronic control unit (ECU), an SbW actuator, and the like. When the driver of the vehicle turns the steering wheel, this movement is detected by the sensor, and the electronic control device adjusts the direction of the wheels of the vehicle using the SbW actuator based on the detected signal. The SbW actuator is a motor that moves the wheels of the vehicle under the control of the electronic control unit.

The ESC system 130 is a control system that automatically stabilizes the vehicle when the vehicle slips or is in an unstable situation, such as an understeer state or an oversteer state. When the direction in which the driver of the vehicle steers is different from the direction in which a vehicle actually drives, the ESC system 130 may individually control the brakes of each wheel or adjust the engine output to allow the vehicle to drive stably. The ESC system 130 may not brake the front wheels of the vehicle while aquaplaning is in progress, but may brake the rear wheels of the vehicles in a limited manner. When there is a steering offset in the vehicle after the aquaplaning is over, the ESC system 130 compares the steering angle set by the driver with the actual traveling direction of the vehicle based on the steering angle sensor, the wheel speed sensor, and the like to calculate the steering offset. Such a steering offset may be used as an initial reference value of a yaw rate targeted by the ESC system 130.

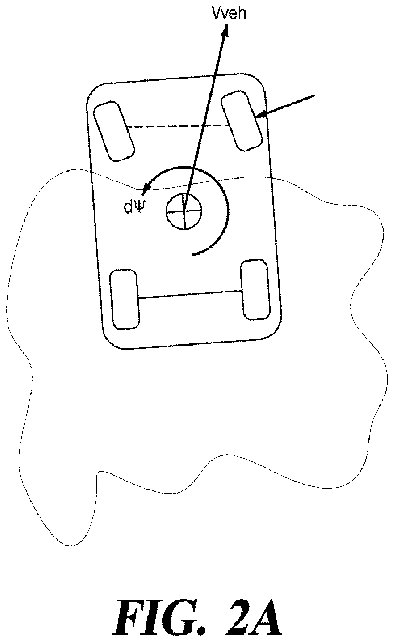

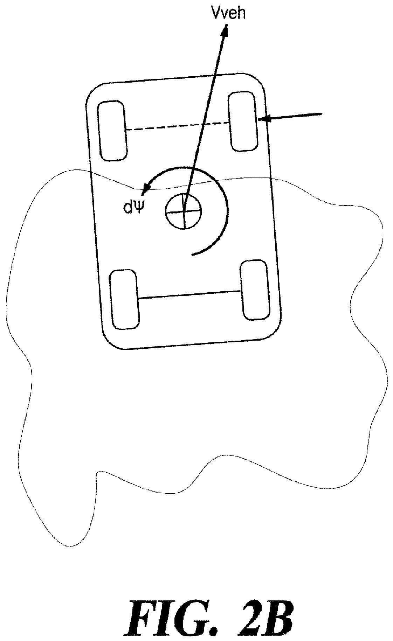

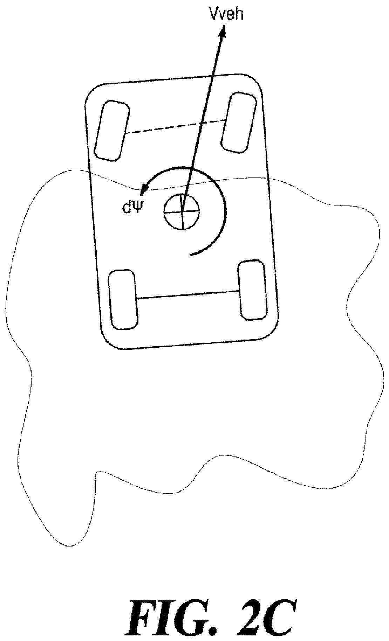

FIGS. 2A, 2B, and 2C are diagrams for describing a wheel angle of a vehicle, a velocity of a vehicle, and a yaw rate of a vehicle when aquaplaning occurs, according to an embodiment of the present disclosure.

Referring to FIG. 2A, when aquaplaning occurs and a wheel angle of a vehicle is controlled by a driver, the direction of the wheel angle of the vehicle and the direction of velocity vᵥₑₕ of the vehicle, sum of longitudinal velocity and lateral velocity of the vehicle, may vary. Here, the lateral force of the vehicle may become very high depending on the operation of the driver.

Referring to FIG. 2B, when aquaplaning occurs and a wheel angle of a vehicle is fixed, the direction of the wheel angle of the vehicle and the direction of velocity vᵥₑₕ of the vehicle may be different. Here, the lateral force of the vehicle may be very high depending on the lateral velocity of the vehicle and the yaw rate dΨ of the vehicle.

Referring to FIG. 2C, when aquaplaning occurs and the SbW actuator of the SbW system of the present disclosure is deactivated, the direction of a wheel angle of a vehicle and the direction of velocity vᵥₑₕ of the vehicle may coincide. Accordingly, the side force of the vehicle is not generated, and the wheel angle of the vehicle may be automatically adjusted according to the lateral velocity of the vehicle and the yaw rate dΨ of the vehicle.

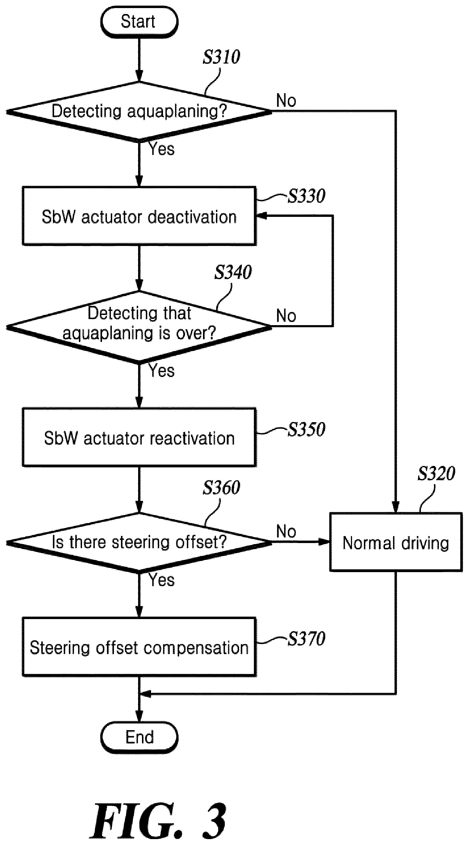

FIG. 3 is a flowchart for describing a process of controlling a vehicle when aquaplaning occurs, according to an embodiment of the present disclosure.

Referring to FIG. 3, the control unit 110 determines whether aquaplaning is detected (S310). The control unit 110 may determine whether aquaplaning is detected by using the SbW system 120 or the ESC system 130. The SbW system 120 may detect that aquaplaning has occurred when the feedback force of the wheel of the vehicle rapidly decreases. The ESC system 130 may detect the occurrence of aquaplaning by using a high slip yaw rate, a low brake pressure, a yaw rate error, or the like.

When it is determined that the aquaplaning is not detected (S310-NO), the vehicle performs normal traveling (S320). When it is determined that the aquaplaning is detected (S310-YES), the control unit 110 cuts off the power supplied to the SbW system 120 to deactivate the SbW actuator of the SbW system 120 (S330). The control unit 110 determines whether the aquaplaning is over (S340-NO). The control unit 110 may determine whether the aquaplaning is over by using the SbW system 120 or the ESC system 130. When it is determined that the aquaplaning is not over (S340-NO), the control unit 110 maintains deactivation of the SbW actuator of the Sbw system 120 (S330). When it is determined that the aquaplaning has been over (S340-YES), the control unit 110 activates the SbW actuator of the SbW system 120 again (S350). The control unit 110 may maintain deactivation of the SbW actuator of the Sb W system 120 for a predetermined period of time before reactivating the SbW actuator of SbW system 120.

The control unit 110 determines whether the steering offset exists in the vehicle after the aquaplaning is over (S360). The control unit 110 may determine whether a steering offset exists in the vehicle by using the ESC system 130. When it is determined that the steering offset does not exist in the vehicle (S360-NO), the vehicle performs normal driving (S320). When it is determined that the steering offset exists in the vehicle (S360-YES), the control unit 110 compensates for the steering offset (S370). The steering offset may be compensated for by the control unit 110 repeating the process of deactivating and reactivating the SbW actuators of the SbW system 120. The steering offset may be compensated for by the ESC system 130 applying a different braking force to each wheel, controlling the output of the vehicle's engine, or automatically performing a calibration algorithm.

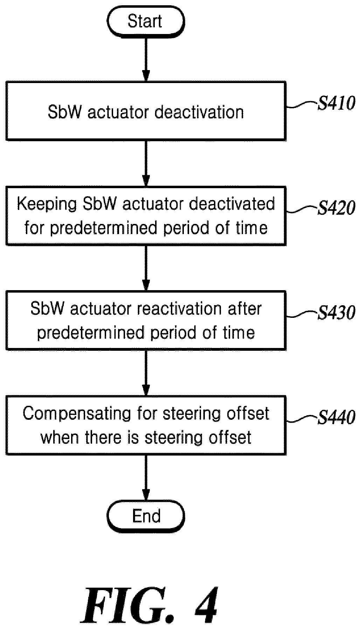

FIG. 4 is a flowchart for describing a method of alleviating the instability of a vehicle when aquaplaning occurs, according to an embodiment of the present disclosure.

Referring to FIG. 4, when aquaplaning is detected, the control unit 110 deactivates the SbW actuator (S410). The aquaplaning may be detected based on at least one of a feedback force of a wheel of the vehicle, a slip yaw rate of the vehicle, brake pressure of the vehicle, and a yaw rate of the vehicle. The SbW actuator may be deactivated by shutting off the power supplied to the SbW system 120.

When the aquaplaning is over, the control unit 110 maintains deactivation of the SbW actuator for a predetermined period of time (S420). The control unit 110 reactivates the SbW actuator after a predetermined period has elapsed (S430). After reactivating the SbW actuator, the control unit 110 compensates for the steering offset when the steering offset is present (S440). A process of compensating for the steering offset may include a process of repeating the deactivation and activation of the SbW actuator at least once or more to compensate for the steering offset. The steering offset may be compensated when the vehicle is driving in a straight line. The control unit 110 may brake the rear wheels of the vehicle while the aquaplaning is in progress. The control unit 110 may restrictively brake the rear wheels of the vehicle by using the ESC system 130. The control unit 110 may control the direction of the steering wheel of the vehicle while the aquaplaning is in progress.

Each element of the apparatus or method in accordance with the present disclosure may be implemented in hardware or software, or a combination of hardware and software. The functions of the respective elements may be implemented in software, and a microprocessor may be implemented to execute the software functions corresponding to the respective elements.

Various embodiments of systems and techniques described herein can be realized with digital electronic circuits, integrated circuits, field programmable gate arrays (FPGAs), application specific integrated circuits (ASICs), computer hardware, firmware, software, and/or combinations thereof. The various embodiments can include implementation with one or more computer programs that are executable on a programmable system. The programmable system includes at least one programmable processor, which may be a special purpose processor or a general purpose processor, coupled to receive and transmit data and instructions from and to a storage system, at least one input device, and at least one output device. Computer programs (also known as programs, software, software applications, or code) include instructions for a programmable processor and are stored in a "computer-readable recording medium."

The computer-readable recording medium may include all types of storage devices on which computer-readable data can be stored. The computer-readable recording medium may be a non-volatile or non-transitory medium such as a read-only memory (ROM), a random access memory (RAM), a compact disc ROM (CD-ROM), magnetic tape, a floppy disk, or an optical data storage device. In addition, the computer-readable recording medium may further include a transitory medium such as a data transmission medium. Furthermore, the computer-readable recording medium may be distributed over computer systems connected through a network, and computer-readable program code can be stored and executed in a distributive manner.

Although operations are illustrated in the flowcharts/timing charts in this specification as being sequentially performed, this is merely an exemplary description of the technical idea of one embodiment of the present disclosure. In other words, those skilled in the art to which one embodiment of the present disclosure belongs may appreciate that various modifications and changes can be made without departing from essential features of an embodiment of the present disclosure, that is, the sequence illustrated in the flowcharts/timing charts can be changed and one or more operations of the operations can be performed in parallel. Thus, flowcharts/timing charts are not limited to the temporal order.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the claims and equivalents thereof.

## Claims

1. A method performed by a control device of a vehicle, the method comprising:
deactivating a steer-by-wire, SbW, actuator when aquaplaning is detected;
maintaining deactivation of the SbW actuator for a predetermined period of time after the aquaplaning is over;
reactivating the SbW actuator after the predetermined period of time has elapsed; and
compensating for steering offset when a steering offset exists after reactivating the SbW actuator.

2. The method of claim 1, wherein the aquaplaning is detected based on at least one of a feedback force of a wheel of the vehicle, a slip yaw rate of the vehicle, brake pressure of the vehicle, and a yaw rate of the vehicle.

3. The method of claim 1, or 2, further comprising:
controlling a direction of a steering wheel of the vehicle while the aquaplaning is in progress.

4. The method of claim 1, 2, or 3, further comprising:
braking a rear wheel of the vehicle during while the aquaplaning is in progress.

5. The method of any one of claims 1 to 4,
wherein the compensating for steering offset comprises:
repeating the deactivation and activation of the SbW actuator at least once to compensate for the steering offset, and
the steering offset is compensated when the vehicle drives in a straight line.

6. An apparatus for controlling a vehicle, the apparatus comprising:
a memory; and a plurality of processors,
wherein at least one processor of the plurality of processors is configured to:
deactivate a SbW actuator when aquaplaning is detected; and
maintain deactivation of the SbW actuator for a predetermined period of time after the aquaplaning is over;
reactivate the SbW actuator after the predetermined period of time has elapsed; and
compensate for steering offset when a steering offset exists after reactivating the SbW actuator.

7. The apparatus of claim 6,
wherein the aquaplaning is detected based on at least one of a feedback force of a wheel of the vehicle, a slip yaw rate of the vehicle, brake pressure of the vehicle, and a yaw rate of the vehicle.

8. The apparatus of claim 6, or 7, wherein the at least one processor is configured to control a direction of a steering wheel of the vehicle while the aquaplaning is in progress.

9. The apparatus of claim 6, 7, or 8, wherein the at least one processor is configured to brake a rear wheel of the vehicle during while the aquaplaning is in progress.

10. The apparatus of any one of claims 6 to 9,
wherein the at least one processor is configured to:
repeat the deactivation and activation of the SbW actuator at least once to compensate for the steering offset, and
wherein, the steering offset is compensated when the vehicle drives in a straight line.
